# EUROPÄISCHE PATENTSCHRIFT

(11) **EP 2 879 824 B1**
(45) Veröffentlichungstag und Bekanntmachung des Hinweises auf die Patenterteilung: **04.10.2017**
(21) Anmeldenummer: 13744569.8
(22) Anmeldetag: 02.08.2013
(51) Int. Cl.: B23B 29/04, B23B 31/26

(54) **AUSWUCHT- ODER MESSADAPTER**
BALANCING OR MEASURING ADAPTOR
ADAPTATEUR D'ÉQUILIBRAGE OU DE MESURE

(30) Priorität: 02.08.2012 DE 102012107099
(43) Veröffentlichungstag der Anmeldung: 10.06.2015
(73) Patentinhaber: Haimer GmbH, 86568 Hollenbach-Igenhausen (DE)
(72) Erfinder: HAIMER, Franz, Igenhausen 86568 (DE); KÜGLE, Wolfgang, 86551 Aichach (DE)
(74) Vertreter: Charrier Rapp & Liebau
(86) Internationale Anmeldenummer: PCT/EP2013/066244
(87) Internationale Veröffentlichungsnummer: WO 2014/020135

(56) Entgegenhaltungen:
- EP-A1- 1 166 932
- EP-A1- 1 201 340
- DE-A1- 4 303 608
- JP-A- 2011 110 690

## Beschreibung

Die Erfindung betrifft einen Auswucht- oder Messadapter nach dem Oberbegriff des Anspruchs 1 und eine Auswucht- oder Messmaschine mit einem derartigen Auswucht- oder Messadapter.

Derartige Auswucht- oder Messadapter werden zur Einspannung eines rotierenden Bauteils an einer Auswucht- und/oder Messmaschine eingesetzt. Aus der DE 299 80 181 ist eine Auswuchtmaschine mit einem gattungsgemäßen Auswuchtadapter bekannt. Dieser enthält einen Grundkörper mit einer zentrischen Aufnahmeöffnung für das zu spannende Bauteil und eine relativ zum Grundkörper axial verstellbare Zangenbetätigungseinheit für eine Spannzange. Die Spannzange ist bei dieser bekannten Ausführung fest an dem Grundkörper montiert und gegenüber diesem nicht axial beweglich. Durch axiale Verstellung der Zangenbetätigungseinheit werden die Spannzungen der Spannzange daher nur radial bewegt, so dass der axiale Einzugsweg beschränkt ist. Ein Auswucht- oder Messadapter gemäß dem Oberbegriff des Anspruchs 1 ist aus JP 2011 110690 A bekannt. Aufgabe der Erfindung ist es, einen Auswucht- oder Messadapter zu schaffen, der eine positionsgenaue und reproduzierbare Aufnahme und Halterung eines zu spannenden Bauteils mit einem vergrößerten Einzugsweg ermöglicht.

Diese Aufgabe wird durch einen Auswucht- oder Messadapter mit den Merkmalen des Anspruchs 1 gelöst. Zweckmäßige Weiterbildungen und vorteilhafte Ausführungsformen der Erfindung sind Gegenstand der Unteransprüche.

Bei dem erfindungsgemäßen Auswucht- oder Messadapter ist die Spannzange axial beweglich innerhalb des Grundkörpers derart angeordnet, dass sich die Spannzungen der Spannzange bei einer Verschiebung des Betätigungselements aus der Lösestellung in die Spannstellung in einer ersten Spannphase zunächst an einem dem zu spannenden Bauteil zugeordneten vorderen Spannbereich radial nach außen bewegen und dass sich die Spannzungen in einer zweiten Spannphase mit einer Axialbewegung innerhalb des Grundkörpers an einem dem Grundkörper zugeordneten hinteren Spannbereich radial nach außen bewegen. Dadurch können die Spannzungen der Spannzange beim Spannen zunächst an ihren äußeren freien Enden radial nach außen schwenken und in eine entsprechende Spannnut an der Innenseite einer Vertiefung des zu spannenden Bauteils eingreifen, während der hintere Spannbereich der Spannzungen noch keine Radialbewegung ausführt. Erst bei einer weiteren Verschiebung des Betätigungselements in die Spannstellung führen die Spannzungen auch eine Axialbewegung innerhalb des Grundkörpers aus und werden auch an einem hinteren Spannbereich radial nach außen gedrückt. Über diese zusätzliche Axialbewegung der Spannzungen innerhalb des Grundkörpers kann ein vergrößerter axialer Einzugsweg erreicht werden.

Das Betätigungselement weist zweckmäßigerweise eine dem vorderen Spannbereich der Spannzungen zugeordnete erste äußere Konusfläche und mindestens eine dem hinteren Spannbereich der Spannzungen zugeordnete zweite Konusfläche auf, wobei die zweite Konusfläche so gegenüber der ersten Konusfläche axial versetzt ist, dass bei einer Verschiebung des Betätigungselements in die Spannstellung zunächst die erste äußere Konusfläche und später die zweite Konusfläche in Eingriff mit den Spannzungen der Spannzange gelangt.

In einer vorteilhaften Ausführung weisen die Spannzungen eine erste innere Spannfläche und eine zweite innere Spannfläche zur Anlage an der ersten Konusfläche bzw. der zweiten Konusfläche des Betätigungselements auf. Ferner kann das Betätigungselement eine an die zweite Konusfläche anschließende dritte Konusfläche zur Anlage an einer dritten inneren Spannfläche der Spannzungen enthalten, wobei die dritten Konusflächen des Betätigungselements und die dritten Spannflächen der Spannzungen eine geringere Neigung gegenüber der Mittelachse des Grundkörpers als die zweiten Konusflächen des Betätigungselements und die zweiten Spannflächen der Spannzungen aufweisen. Dadurch kann erreicht werden, dass die Spannzungen zunächst einen großen Spannweg mit kleinerer Spannkraft und anschließend einen kleineren Spannweg mit größerer Spannkraft vollziehen. An der Außenseite des hinteren Spannbereichs der Spannzungen ist vorzugsweise eine konische Anlagefläche zur Anlage an einer konischen inneren Spannfläche des Grundkörpers vorgesehen.

In einer günstigen Ausführungsform sind die Spannzungen einteilig mit einem hülsenförmigen Sockel ausgeführt. Durch die einteilige Ausführung kann die Anzahl der zueinander beweglichen Teile reduziert und dadurch eine gleichmäßige Massenverteilung beim Spannvorgang ereicht werden. In dem Sockel können zu vorderen axialen Schlitzen zwischen den Spannzungen ausgerichtete hintere Schlitze angeordnet sein, die zu den vorderen Schlitzen hin offen und nach hinten geschlossen sind. Dadurch kann für die radiale Rückstellbewegung der Spannzungen die Elastizität der Spannzange selbst genutzt werden. Es sind keine gesonderten Rückstellelemente erforderlich. Bevorzugt sind die hinteren Schlitze breiter als die vorderen Schlitze. Dadurch sind die Spannzungen im hinteren Bereich sehr flexibel und biegsam.

Die Spannzange kann in eine Vertiefung des Grundkörpers eingesetzt sein und steht mit ihrem untern Ende auf einer durch Druckfedern beaufschlagten Druckscheibe auf. Durch radiale Stifte im Grundkörper kann die Spannzange gegen unerwünschtes Herausfallen axial gesichert sein.

Um Unregelmäßigkeiten wie z.B. Rundlauffehler an den Spannflächen ausgleichen zu können, sind die Spannzungen im vorderen Bereich relativ langgestreckt ausgeführt. Dadurch ist eine axiale Elastizität erreichbar. Insbesondere ist die Länge des vorderen Bereichs der Spannzungen größer als der Durchmesser der Spannzange.

Um die Reibung bei der Axialbewegung der Spannzange innerhalb des Grundkörpers zu reduzieren, kann die Spannzange über einen z.B. mit Wälzkörpern versehenen Lagerring axial verschiebbar innerhalb des Grundkörpers angeordnet sein.

Die Wälzkörper können mit einer radialen Vorspannung belastet sein, so dass eine spielfreie Führung entsteht.

Die Erfindung betrifft ferner eine Auswucht- oder Messmaschine, die einen Auswucht- oder Messadapter mit den vorstehend beschriebenen Merkmalen enthält.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1:**: einen Längsschnitt eines Auswucht- oder Messadapters in einer Lösestellung;
- **Figur 2:**: einen Längsschnitt des Auswucht- oder Messadapters von Figur 1 in einer Zwischenstellung;
- **Figur 3:**: einen Längsschnitt des Auswucht- oder Messadapters von Figur 1 in einer Spannstellung und
- **Figur 4:**: eine Spannzange in einer Perspektive.

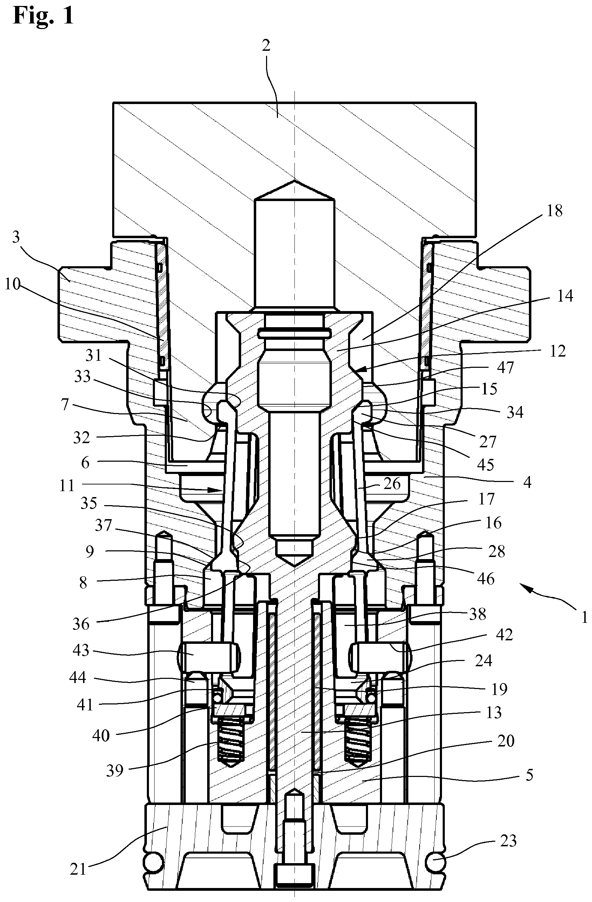

Der in den Figuren 1 bis 3 in unterschiedlichen Spannstellungen gezeigte Auswucht- oder Messadapter 1 ist zum Spannen eines rotierenden Bauteils 2 an einer Auswucht- oder Messmaschine konzipiert. Bei derartigen Maschinen ist eine zentrische Aufnahme des auszuwuchtenden oder zu messenden Bauteils 2 mit hoher Rundlauf- und Wiederholgenauigkeit von besonderer Bedeutung. Der Auswucht- oder Messadapter 1 enthält einen z.B. in die Antriebsspindel der Auswucht- oder Messmaschine einsetzbaren Grundkörper, der bei der gezeigten Ausführung aus einem mit einem Flansch 3 versehenen hohlzylindrischen Oberteil 4 und einem mit diesem verschraubten Unterteil 5 besteht. Über den Flansch 3 kann der Grundkörper z.B. an der Oberseite der Antriebsspindel befestigt werden.

Das Oberteil 4 weist eine obere Aufnahmeöffnung 6 für einen Schaft 7 des zu spannenden Bauteils 2 und einen unteren Durchgangsbereich 8 mit konischen inneren Spannflächen 9 auf. Bei dem Bauteil 2 kann es sich z.B. um eine Werkzeugaufnahme für ein Bohr-, Fräs- oder Schleifwerkzeug, einen Rotor oder ein anderes auszuwuchtendes oder zu vermessendes Maschinenteil handeln. Der Schaft 7 ist konisch ausgebildet und kann einen polygonalen, kreisrunden oder sonstigen geeigneten Querschnitt aufweisen. Entsprechend ist auch die Aufnahmeöffnung 6 des Oberteils 4 konisch und weist eine an den Querschnitt des Schafts 7 angepasste Innenkontur auf. In der Aufnahmeöffnung 6 des Oberteils 4 kann eine Lagerbuchse 10 mit mehreren in einem Käfig angeordneten Wälzkörpern eingesetzt sein. Dadurch kann die Einführung des Schafts 7 in das Oberteil 4 des Grundkörpers erleichtert werden. In dem aus dem Oberteil 4 und dem Unterteil 5 zusammengesetzten Grundkörper sind außerdem eine Spannzange 11 und ein zu dieser koaxiales Betätigungselement 12 zur Betätigung der Spannzange 11 untergebracht.

Das Betätigungselement 12 enthält einen unteren stangenförmigen Führungsbereich 13 und einen oberen Betätigungskopf 14 mit einer ersten äußeren Konusfläche 15 im oberen Teil und zwei aneinander anschließenden zweiten und dritten äußeren Konusflächen 16 und 17 mit unterschiedlicher Neigung im unteren Teil. Der Betätigungskopf 14 des Betätigungselements 12 greift mit seinem oberen Teil in eine Vertiefung 18 im Schaft 4 des zu spannenden Bauteils 2 ein. Bei der gezeigten Ausführung weisen die erste und zweite Konusfläche 15 und 16 eine Neigung von 45° und die dritte Konusfläche 17 eine Neigung von 4° zur Mittelachse des Grundkörpers auf. Durch den stangenförmigen Führungsbereich 13 ist das Betätigungselement 12 über eine mit Wälzkörpern versehene Lagerhülse 19 axial verschiebbar in dem Unterteil 5 des Grundkörpers geführt. Die Lagerhülse 19 ist in eine zentrische Durchgangsbohrung 20 im Unterteil 5 eingesetzt. Die Wälzkörper können unter radialer Vorspannung stehen, so dass eine spielfreie Führung entsteht. An dem gegenüber dem Unterteil 5 nach unten vorstehenden Ende des stangenförmigen Führungsbereichs 13 ist ein Kolben 21 befestigt.

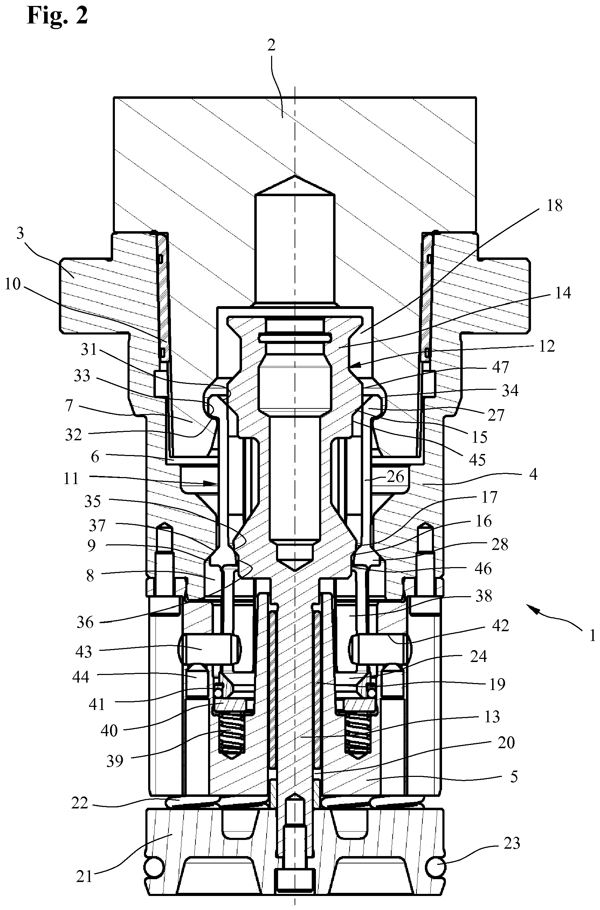

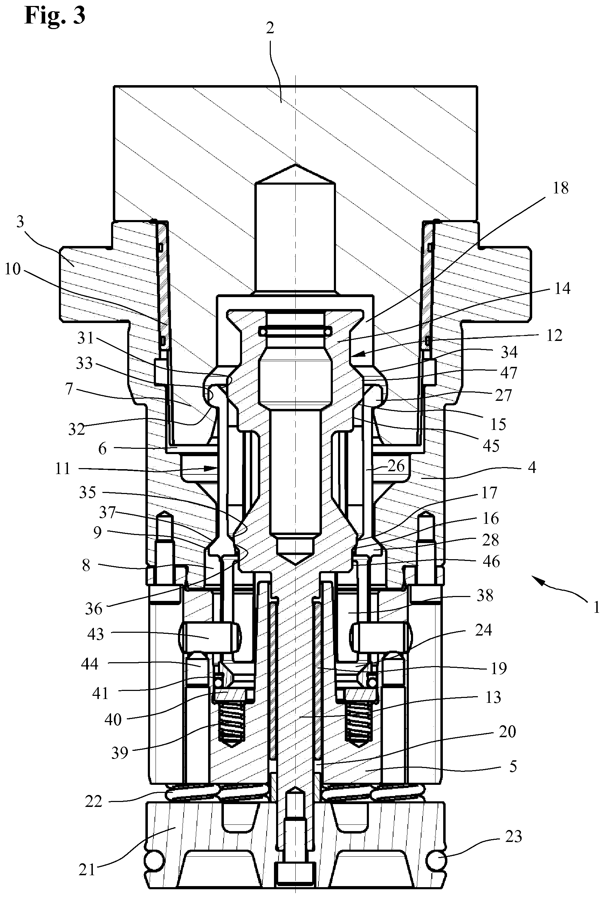

Zwischen dem Kolben 21 und dem Unterteil 5 sind in den Figuren 2 und 3 erkennbare Druckfedern 22 eingespannt. Die Druckfedern 22 sind zur stabilen Halterung in nicht erkennbare Sacklöcher im Unterteil 5 und im Kolben 21 eingesetzt. Durch diese Druckfedern 22 wird das Betätigungselement 12 in die in Figur 3 gezeigte Spannstellung gedrückt. Durch Verschiebung des Kolbens 21 entgegen der Kraft der Druckfedern 22 kann das Betätigungselement 12 über eine in Figur 2 gezeigte Zwischenstellung in die in Figur 1 gezeigte Lösestellung verschoben werden. Hierzu kann der Kolben 21 über eine radiale Dichtung 23 abgedichtet in der Antriebsspindel der Auswucht- oder Messmaschine axial verschiebbar angeordnet sein und von der Unterseite mit Druckluft beaufschlagt werden.

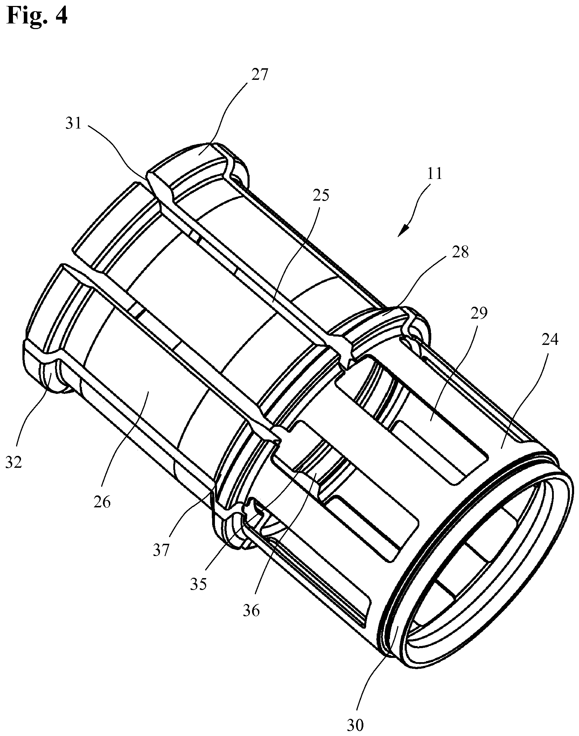

Die in Figur 4 gesondert dargestellte Spannzange 11 weist einen hülsenförmigen Sockel 24 und mehrere in Umfangsrichtung durch axiale Schlitze 25 voneinander getrennte, radial federnde Spannzungen 26 mit einem dem zu spannenden Bauteil 2 zugeordneten vorderen Spannbereich 27 und einem dem Grundkörper zugeordneten hinteren Spannbereich 28 auf. Die beiden Spannbereiche 27 und 28 sind als Verdickungen der Spannzungen 26 ausgeführt. In dem hülsenförmigen Sockel 24 der Spannzange 11 sind ebenfalls zu den vorderen Schlitzen 25 axial ausgerichtete hintere Schlitze 29 vorgesehen, die zu den vorderen Schlitzen 25 hin offen und zum hinteren Ende der Sockels 24 hin geschlossen sind. Die in die vorderen Schlitze 25 übergehenden hinteren Schlitze 29 weisen eine größere Breite als die vorderen Schlitze 25 auf. An dem hinteren Ende des Sockels 23 ist eine außenseitige Ringnut 30 eingearbeitet.

Die dem zu spannenden Bauteil 2 zugewandten vorderen Spannbereiche 27 weisen erste innere konische Spannflächen 31 zur Anlage an der ersten äußeren Konusfläche 15 am Betätigungskopf 14 des Betätigungselements 12 auf. An den vorderen Spannbereichen 27 sind außerdem erste äußere Spannflächen 32 zur Anlage an einer inneren Spannfläche 33 einer an der Innenseite der Vertiefung 18 angeordneten inneren Spannnut 34 vorgesehen. An der Innenseite der hinteren Spannbereiche 28 befinden sich aufeinanderfolgende konische zweite und dritte Spannflächen 35 und 36 zur Anlage an den zweiten und dritten Konusflächen 16 und 17 des Betätigungselements 12. Entsprechend den zweiten und dritten Konusflächen 16 und 17 sind auch die zweiten und dritten konischen Spannflächen 35 und 36 unterschiedlich geneigt und weisen bei dem gezeigten Ausführungsbeispiel einen Winkel von 45° bzw. 4° gegenüber der Mittelachse auf. An der Außenseite der hinteren Spannbereiche 28 ist eine konische Anlagefläche 37 zur Anlage an der konischen inneren Spannfläche 9 an der Innenseite des Oberteils 4 vorgesehen.

Die Spannzange 11 ist über den ringförmigen Sockel 24 in einer entsprechenden Vertiefung 38 des Unterteils 5 eingesetzt und steht mit ihren untern Ende auf einer durch Druckfedern 39 nach oben beaufschlagten Druckscheibe 40 auf. In der Ringnut 30 am unteren Ende der Spannzange 11 ist ein Lagerring 41 mit mehreren innerhalb eines Käfigs angeordneten Wälzkörpern zur Führung der Spannzange 11 innerhalb der Vertiefung 38 angeordnet. Auch diese Wälzkörper können unter radialer Vorspannung stehen und somit eine spielfreie Führung erzielen. In radiale Bohrungen 42 im Unterteil 5 sind nach innen vorstehende radiale Stifte 43 zum Eingriff in die hinteren Schlitze 29 der Spannzange 11 eingesetzt. Dadurch wird die Spannzange 11 innerhalb des Grundkörpers axial gesichert und es kann ein unerwünschtes Herausfallen der Spannzange 11 verhindert werden. Die radial angeordneten Stifte 43 können durch axiale Gewindestifte 44 gesichert sein.

Im Folgenden wird die Funktionsweise des vorstehend beschriebenen Auswucht- oder Messadapters anhand der Figuren 1 bis 3 erläutert:

In Figur 1 ist der Auswuchtadapter 1 in einer Lösestellung gezeigt. Über den z.B. durch Druckluft oder ein anderes Druckfluid beaufschlagten Kolben 21 ist das Betätigungselement 12 nach oben gedrückt. In der gezeigten Lösestellung liegen die federnden Spannzungen 26 der Spannzange 11 mit ihrer Innenseite im Bereich der vorderen Verdickungen 27 an einem ersten zylindrischen Bereich 45 des Betätigungskopfs 14 unterhalb der ersten Konusfläche 15 und im Bereich der hinteren Verdickung 28 an einem zweiten zylindrischen Bereich 46 unterhalb der zweiten Konusfläche 16 an. Der Betätigungskopf 14 weist im ersten zylindrischen Bereich 45 einen geringeren Durchmesser als in einem dritten zylindrischen Bereich 47 oberhalb der ersten Konusfläche 15 auf. Dadurch sind die vorderen Spannbereiche 27 der Spannzange 11 aus der Spannnut 34 heraus radial nach innen gekippt und geben das Bauteil 2 zur Entnahme bzw. zum Einsetzen in den Auswuchtadapter 1 frei.

Wenn die von unten auf den Kolben 21 wirkende Kraft nachlässt, wird das Betätigungselement 12 über die zwischen dem Unterteil 5 und dem Kolben 21 eingespannten Druckfedern 22 nach unten verschoben. Dadurch gleiten die in die Vertiefung 18 des zu spannenden Bauteils 2 eingreifenden vorderen Spannbereiche 27 am freien vorderen Ende der federnden Spannzungen 26 der Spannzange 11 mit ihren inneren konischen Spannflächen 31 an der ersten Konusfläche 15 des Betätigungskopfs 14 entlang, wodurch die vorderen Enden der federnden Spannzungen 26 radial nach außen in die Spannnut 34 an der Innenseite des Bauteils 2 gedrückt werden. In einer ersten Spannphase werden ausschließlich die vorderen Spannbereiche 27 an den vorderen freien Enden der federnden Spannzungen 26 radial nach außen gedrückt, bis die zweite Konusfläche 16 des Betätigungskopfs 14 zur Anlage an den konischen Spannflächen 35 der Spannzange 11 gelangt. Mit zunehmender Axialverschiebung des Betätigungselements 12 werden dann auch die hinteren Spannbereiche 28 in einer zweiten Spannphase radial nach außen gedrückt und die Spannzange 11 führt durch die Anlage der konische Anlagefläche 37 an der konischen inneren Spannfläche 9 des Oberteils 4 auch eine Axialbewegung entgegen der Kraft der Druckfedern 39 aus.

Bei der Bewegung der hinteren Spannbereiche 28 entlang der um 45° geneigten Konusfläche 16 führen die Spannzungen 26 der Spannzange 11 einen großen Spannweg mit kleinerer Spannkraft durch. Wenn die die konischen Spannflächen 36 der Spannzange 11 bei weiterer Axialbewegung des Betätigungselements 12 zur Anlage an der um 4° geneigten dritten Konusfläche 17 gelangen, wird mit dann kleinerem Spannweg eine größere Spannkraft erzeugt. Die dritte Konusfläche 17 ist in Axialrichtung derart angeordnet, dass eine Bewegung des hinteren Spannbereichs 28 der Spannzungen 26 entlang dieser Fläche und damit ein Spannen mit großer Kraft erst dann erfolgt, wenn sich die Spannzungen 26 mit ihrem vorderen Spannbereich 27 in dem zylindrischen Bereich 47 oberhalb der ersten Konusfläche 15 des Betätigungselements 12 befinden. Die Spannzange 11 wird in der zweiten und dritten Spannphase innerhalb des Grundköpers axial entgegen der Kraft der Druckfedern 39 verschoben.

Durch Druckbeaufschlagung des Kolbens 21 kann der Lösevorgang in umgekehrter Weise erfolgen, wobei der Betätigungskopf 14 in der Endphase des Lösehubs mit seiner oberen Stirnfläche zur Anlage an dem Bauteil 2 kommt und dieses aus der Aufnahmeöffnung 18 des Grundkörpers drückt. Dadurch kann das Bauteil 2 einfach entnommen werden.

Die Erfindung ist nicht auf das vorstehend beschriebene und in der Zeichnung dargestellte Ausführungsbeispiel beschränkt. So können sich die einzelnen Spannphasen auch teilweise überlappen. Außerdem kann das Spannsystem in analoger Weise auch für Spannvorgänge verwendet werden, bei denen die radiale Spannbewegung von außen nach innen verläuft.

## Patentansprüche

1. Auswucht- oder Messadapter (1) zum Spannen eines Bauteils (2) an einem rotierenden Maschinenelement einer Auswucht- oder Messmaschine, der einen Grundkörper (4, 5) mit einer Aufnahmeöffnung (6) für das zu spannende Bauteil (2), eine innerhalb des Grundkörpers (4, 5) axial beweglich angeordnete Spannzange (11) mit Spannzungen (26) zum zentrischen Spannen des Bauteils (2) und ein zwischen einer Spannstellung und Lösestellung axial verstellbares Betätigungselement (12) zur Betätigung der Spannzange (11) enthält, wobei die Spannzungen (26) der Spannzange (11) einen dem zu spannenden Bauteil (2) zugeordneten vorderen Spannbereich (27) und einen dem Grundkörper (4, 5) zugeordneten hinteren Spannbereich (28) aufweisen und das Betätigungselement (12) eine dem vorderen Spannbereich (27) der Spannzungen (26) zugeordnete erste äußere Konusfläche (15) und mindestens eine dem hinteren Spannbereich (28) der Spannzungen (26) zugeordnete zweite äußere Konusfläche (16) enthält, **dadurch gekennzeichnet, dass** die zweite Konusfläche (16) so gegenüber der ersten Konusfläche (15) axial versetzt ist, dass bei einer Verschiebung des Betätigungselements (12) aus der Lösestellung in die Spannstellung zunächst die erste äußere Konusfläche (15) und später die zweite Konusfläche (16) in Eingriff mit den Spannzungen (26) gelangt.

2. Auswucht- oder Messadapter nach Anspruch 1, **dadurch gekennzeichnet, dass** die Spannzungen (26) eine erste innere Spannfläche (31) und eine zweite innere Spannfläche (35) zur Anlage an der ersten Konusfläche (15) bzw. der zweiten Konusfläche (16) des Betätigungselements (12) aufweisen.

3. Auswucht- oder Messadapter nach Anspruch 1 oder 2, **dadurch gekennzeichnet, dass** das Betätigungselement (12) eine an die zweite Konusfläche (16) anschließende dritte Konusfläche (17) zur Anlage an einer dritten inneren Spannfläche (36) der Spannzungen (26) enthält.

4. Auswucht- oder Messadapter nach Anspruch 3, **dadurch gekennzeichnet, dass** die dritten Konusflächen (17) des Betätigungselements (12) und die dritten Spannflächen (36) der Spannzungen (26) eine geringere Neigung gegenüber der Mittelachse des Grundkörpers (4, 5) als die zweiten Konusflächen (16) des Betätigungselements (12) und die zweiten Spannflächen (36) der Spannzungen (26) aufweisen.

5. Auswucht- oder Messadapter nach einem der Ansprüche 1 bis 4, **dadurch gekennzeichnet, dass** die Spannzungen (26) an der Außenseite des hinteren Spannbereichs (28) eine konische Anlagefläche (37) zur Anlage an einer konischen inneren Spannfläche (9) des Grundkörpers (4, 5) aufweisen.

6. Auswucht- oder Messadapter nach einem der Ansprüche 1 bis 5, **dadurch gekennzeichnet, dass** die Spannzungen (26) der Spannzange (11) an einem hülsenförmigen Sockel (24) angeordnet sind.

7. Auswucht- oder Messadapter nach Anspruch 6, **dadurch gekennzeichnet, dass** die Spannzungen (26) der Spannzange (11) durch axiale vordere Schlitze (25) voneinander getrennt sind und dass in dem Sockel (24) zu den vorderen Schlitzen (25) axial ausgerichtete hintere Schlitze (29) angeordnet sind, die zu den vorderen Schlitzen (25) hin offen und nach hinten geschlossen sind.

8. Auswucht- oder Messadapter nach einem der Ansprüche 1 bis 7, **dadurch gekennzeichnet, dass** die Spannzange (11) in eine Vertiefung (38) des Grundkörpers (4, 5) eingesetzt ist und an ihrem unteren Ende durch Druckfedern (39) beaufschlagt ist.

9. Auswucht- oder Messadapter nach Anspruch 8, **dadurch gekennzeichnet, dass** zwischen dem unteren Ende der Spannzange (11) und den Druckfedern (39) eine Druckscheibe (40) angeordnet ist.

10. Auswucht- oder Messadapter nach einem der Ansprüche 1 bis 9, **dadurch gekennzeichnet, dass** die Spannzange (11) durch im Grundkörper (4, 5) angeordnete und nach innen ragende radiale Stifte (43) in Axialrichtung gegen Herausfallen gesichert ist.

11. Auswucht- oder Messadapter nach einem der Ansprüche 1 bis 10, **dadurch gekennzeichnet, dass** die Spannzange (11) über einen Lagerring (41) axial verschiebbar in dem Grundkörper (4, 5) angeordnet ist.

12. Auswucht- oder Messadapter nach einem der Ansprüche 1 bis 11, **dadurch gekennzeichnet, dass** in der Aufnahmeöffnung (6) des Grundkörpers (4, 5) eine Lagerbuchse (10) angeordnet ist.

13. Auswucht- oder Messadapter nach einem der Ansprüche 1 bis 12, **dadurch gekennzeichnet, dass** das Betätigungselement (12) über eine Lagerbuchse (19) in dem Grundkörper (4, 5) gelagert ist.

14. Auswucht- oder Messadapter nach einem der Ansprüche 11 bis 13, **dadurch gekennzeichnet, dass** der Lagering (41) und/oder die Lagerbuchse (10) und/oder die Lagerbuchse (19) radial vorgespannte Wälzkörper aufweisen.

15. Auswucht- oder Messadapter nach einem der Ansprüche 1 bis 14, **dadurch gekennzeichnet, dass** die Spannzungen (26) einen vorderen Bereich mit einer größeren Länge als der Durchmesser der Spannzange (11) aufweisen.

16. Auswucht- oder Messmaschine mit einem Auswucht- oder Messadapter (1), **dadurch gekennzeichnet, dass** der Auswucht- oder Messadapter (1) nach einem der Ansprüche 1 bis 15 ausgebildet ist.

## Claims

1. Balancing or measuring adapter (1) for clamping a component (2) on a rotating machine element of a balancing or measuring machine, which includes a base body (4, 5) with a receiving opening (6) for the component (2) to be clamped, a collet chuck (11) with clamping tongues (26) arranged so as to be axially movable within the base body (4, 5) for centrally clamping the component (2), and an actuating element (12) which is axially displaceable between a clamping position and a release position for actuating the collet chuck (11), wherein the clamping tongues (26) of the collet chuck (11) have a front clamping region (27) associated with the component (2) to be clamped and a rear clamping region (28) associated with the base body (4, 5), and the actuating element (12) includes a first outer cone surface (15) associated with the front clamping region (27) of the clamping tongues (26) and at least one second outer cone surface (16) associated with the rear clamping region (28) of the clamping tongues (26), **characterised in that** the second cone surface (16) is axially offset from the first cone surface (15) in such a way that, upon displacement of the actuating element (12) out of the release position into the clamping position, first of all the first outer cone surface (15) and later the second cone surface (16) becomes engaged with the clamping tongues (26).

2. Balancing or measuring adapter according to claim 1, **characterised in that** the clamping tongues (26) have a first inner clamping surface (31) and a second inner clamping surface (35) for abutment against the first cone surface (15) and the second cone surface (16) of the actuating element (12) respectively.

3. Balancing or measuring adapter according to claim 1 or 2, **characterised in that** the actuating element (12) includes a third cone surface (17) adjoining the second cone surface (16) for abutment against a third inner clamping surface (36) of the clamping tongues (26).

4. Balancing or measuring adapter according to claim 3, **characterised in that** the third cone surfaces (17) of the actuating element (12) and the third clamping surfaces (36) of the clamping tongues (26) are inclined at a lower angle to the centre axis of the base body (4, 5) than the second cone surfaces (16) of the actuating element (12) and the second clamping surfaces (36) of the clamping tongues (26).

5. Balancing or measuring adapter according to one of claims 1 to 4, **characterised in that** the clamping tongues (26) have, on the outside of the rear clamping region (28), a conical contact surface (37) for abutment against a conical inner clamping surface (9) of the base body (4, 5).

6. Balancing or measuring adapter according to one of claims 1 to 5, **characterised in that** the clamping tongues (26) of the collet chuck (11) are arranged on a sleeve-like base (24).

7. Balancing or measuring adapter according to claim 6, **characterised in that** the clamping tongues (26) of the collet chuck (11) are separated from each other by axial front slots (25) and **in that** in the base (24) are arranged rear slots (29) which are axially aligned with the front slots (25) and which open towards the front slots (25) and are closed at the rear.

8. Balancing or measuring adapter according to one of claims 1 to 7, **characterised in that** the collet chuck (11) is inserted in a depression (38) in the base body (4, 5) and is acted upon by compression springs (39) at its lower end.

9. Balancing or measuring adapter according to claim 8, **characterised in that** between the lower end of the collet chuck (11) and the compression springs (39) is arranged a pressure disc (40).

10. Balancing or measuring adapter according to one of claims 1 to 9, **characterised in that** the collet chuck (11) is prevented from falling out in the axial direction by inwardly extending radial pins (43) arranged in the base body (4, 5).

11. Balancing or measuring adapter according to one of claims 1 to 10, **characterised in that** the collet chuck (11) is arranged so as to be axially slidable in the base body (4, 5) by means of a bearing ring (41).

12. Balancing or measuring adapter according to one of claims 1 to 11, **characterised in that** in the receiving opening (6) in the base body (4, 5) is arranged a bearing bush (10).

13. Balancing or measuring adapter according to one of claims 1 to 12, **characterised in that** the actuating element (12) is mounted in the base body (4, 5) by means of a bearing bush (19).

14. Balancing or measuring adapter according to one of claims 11 to 13, **characterised in that** the bearing ring (41) and/or the bearing bush (10) and/or the bearing bush (19) have radially prestressed rolling elements.

15. Balancing or measuring adapter according to one of claims 1 to 14, **characterised in that** the clamping tongues (26) have a front region with a longer length than the diameter of the collet chuck (11).

16. Balancing or measuring machine having a balancing or measuring adapter (1), **characterised in that** the balancing or measuring adapter (1) is designed according to one of claims 1 to 15.

## Revendications

1. Adaptateur d'équilibrage ou de mesure (1) servant à serrer un composant (2) au niveau d'un élément de machine rotatif d'une machine d'équilibrage ou de mesure, lequel contient un corps de base (4, 5) pourvu d'une ouverture de réception (6) pour le composant (2) à serrer, une pince de serrage (11) disposée de manière mobile axialement à l'intérieur du corps de base (4, 5), pourvue de languettes de serrage (26) servant à serrer de manière centrée le composant (2) et un élément d'actionnement (12) pouvant être ajusté de manière axiale entre une position de serrage et une position de desserrage, servant à actionner la pince de serrage (11), dans lequel les languettes de serrage (26) de la pince de serrage (11) présentent une zone de serrage avant (27) associée au composant (2) à serrer et une zone de serrage arrière (28) associée au corps de base (4, 5) et l'élément d'actionnement (12) contient une première surface conique (15) extérieure associée à la zone de serrage avant (27) des languettes de serrage (26) et au moins une deuxième surface conique (16) extérieure associée à la zone de serrage arrière (28) des languettes de serrage (26), **caractérisé en ce que** la deuxième surface conique (16) est décalée de manière axiale de telle sorte par rapport à la première surface conique (15) que dans le cas d'un coulissement de l'élément d'actionnement (12) depuis la position de desserrage dans la position de serrage, d'abord la première surface conique (15) extérieure et ultérieurement la deuxième surface conique (16) parviennent en prise avec les languettes de serrage (26).

2. Adaptateur d'équilibrage ou de mesure selon la revendication 1, **caractérisé en ce que** les languettes de serrage (26) présentent une première surface de serrage (31) intérieure et une deuxième surface de serrage (35) intérieure destinées à venir en appui au niveau de la première surface conique (15) ou de la deuxième surface conique (16) de l'élément d'actionnement (12).

3. Adaptateur d'équilibrage ou de mesure selon la revendication 1 ou 2, **caractérisé en ce que** l'élément d'actionnement (12) contient une troisième surface conique (17) se raccordant à la deuxième surface conique (16), destinée à venir en appui au niveau d'une troisième surface de serrage (36) intérieure des languettes de serrage (26).

4. Adaptateur d'équilibrage ou de mesure selon la revendication 3, **caractérisé en ce que** les troisièmes surfaces coniques (17) de l'élément d'actionnement (12) et les troisièmes surfaces de serrage (36) des languettes de serrage (26) présentent par rapport à l'axe central du corps de base (4, 5) une inclinaison inférieure à celle des deuxièmes surfaces coniques (16) de l'élément d'actionnement (12) et des deuxièmes surfaces de serrage (36) des languettes de serrage (26).

5. Adaptateur d'équilibrage ou de mesure selon l'une quelconque des revendications 1 à 4, **caractérisé en ce que** les languettes de serrage (26) présentent, au niveau du côté extérieur de la zone de serrage (28) arrière, une surface d'appui (37) conique destinée à venir en appui au niveau d'une surface de serrage (9) intérieure conique du corps de base (4, 5).

6. Adaptateur d'équilibrage ou de mesure selon l'une quelconque des revendications 1 à 5, **caractérisé en ce que** les languettes de serrage (26) de la pince de serrage (11) sont disposées au niveau d'un socle (24) présentant une forme de douille.

7. Adaptateur d'équilibrage ou de mesure selon la revendication 6, **caractérisé en ce que** les languettes de serrage (26) de la pince de serrage (11) sont séparées les unes des autres par des entailles avant (25) axiales, et que des entailles arrière (29) orientées de manière axiale par rapport aux entailles avant (25) sont disposées dans le socle (24), lesquelles entailles arrière sont ouvertes en direction des entailles avant (25) et sont fermées vers l'arrière.

8. Adaptateur d'équilibrage ou de mesure selon l'une quelconque des revendications 1 à 7, **caractérisé en ce que** la pince de serrage (11) est insérée dans un renfoncement (38) du corps de base (4, 5) et est soumise au niveau de son extrémité inférieure à l'action de ressorts de pression (39).

9. Adaptateur d'équilibrage ou de mesure selon la revendication 8, **caractérisé en ce qu'**un disque de pression (40) est disposé entre l'extrémité inférieure de la pince de serrage (11) et les ressorts de pression (39) .

10. Adaptateur d'équilibrage ou de mesure selon l'une quelconque des revendications 1 à 9, **caractérisé en ce que** la pince de serrage (11) est bloquée par des tiges (43) radiales disposées dans le corps de base (4, 5) et dépassant vers l'intérieur dans la direction axiale pour empêcher toute chute.

11. Adaptateur d'équilibrage ou de mesure selon l'une quelconque des revendications 1 à 10, **caractérisé en ce que** la pince de serrage (11) est disposée dans le corps de base (4, 5) de manière à pouvoir être coulissée de manière axiale par l'intermédiaire d'une bague de palier (41).

12. Adaptateur d'équilibrage ou de mesure selon l'une quelconque des revendications 1 à 11, **caractérisé en ce qu'**un coussinet (10) est disposé dans l'ouverture de logement (6) du corps de base (4, 5).

13. Adaptateur d'équilibrage ou de mesure selon l'une quelconque des revendications 1 à 12, **caractérisé en ce que** l'élément d'actionnement (12) est monté dans le corps de base (4, 5) par l'intermédiaire d'un coussinet (19).

14. Adaptateur d'équilibrage ou de mesure selon l'une quelconque des revendications 11 à 13, **caractérisé en ce que** la bague de palier (41) et/ou le coussinet (10) et/ou le coussinet (19) présentent des corps de roulements précontraints de manière radiale.

15. Adaptateur d'équilibrage ou de mesure selon l'une quelconque des revendications 1 à 14, **caractérisé en ce que** les languettes de serrage (26) présentent une zone avant présentant une longueur plus grande que le diamètre de la pince de serrage (11).

16. Machine d'équilibrage ou de mesure comprenant un adaptateur d'équilibrage ou de mesure (1), **caractérisée en ce que** l'adaptateur d'équilibrage ou de mesure (1) est réalisé selon l'une quelconque des revendications 1 à 15.
